# EUROPEAN PATENT SPECIFICATION

(11) **EP 3 173 267 B1**
(45) Date of publication and mention of the grant of the patent: **20.03.2019**
(21) Application number: 16200602.7
(22) Date of filing: 24.11.2016
(51) Int. Cl.: B60H 1/00, F25B 41/04, B60H 1/32

(54) **AIR CONDITIONING SYSTEM IN PARTICULAR FOR ELECTRIC VEHICLE APPLICATIONS**
KLIMAANLAGE, INSBESONDERE FÜR ELEKTRISCHE FAHRZEUGANWENDUNGEN
SYSTÈME DE CONDITIONNEMENT D'AIR, EN PARTICULIER POUR VÉHICULE AUTOMOBILE

(30) Priority: 24.11.2015 IT UB20155855
(43) Date of publication of application: 31.05.2017
(73) Proprietor: IVECO FRANCE S.A.S., 69200 Vénissieux (FR)
(72) Inventor: CODRON, Stephane, 69008 LYON (FR); THOMAS, Romain, 69007 LYON (FR)
(74) Representative: Fiume, Orazio

(56) References cited:
- FR-A1- 2 983 285
- US-A1- 2010 058 799

## Description

### Field of the invention

The present invention relates to an air conditioning system in particular for electric vehicle applications.

### Description of the prior art

Electric vehicles are problematic to be conditioned during winter. Indeed, while traditional vehicles, provided with combustion engines, have a large amount of heat expelled by the combustion engine that can be exploited to heat the vehicle coach, the electric vehicle have not an equivalent heat source.

It is well known that the conditioning systems are capable to subtract heat from a closed room to disperse it in the external environment according to a refrigeration circuit and can invert their functioning by providing heat to a closed room subtracted by the external environment according to a so called "heat pump" functioning.

During heat pump functioning, the external exchanger, typically a fluid/air exchanger, plays the role of the evaporator "absorbing" from the environment.

However, when the external environmental temperature is low, frost clogs the evaporator fins by reducing the exchange performance of the evaporator and the efficiency of the conditioning system falls too.

According to the known art, the evaporator performance can be extended during winter though electric heaters arranged in contact with the evaporator surfaces in order to melt frost rid the evaporator fins.

The resistors efficiency, as known, is low, thus, the overall efficiency of the system is reduced, even if thanks to the electric heaters the evaporator is capable to work. US2010058799 discloses a refrigerant scheme whose features are in the preamble of the appended claim 1.

### Summary of the invention

Therefore it is the main object of the present invention to provide an air conditioning system, according to claim 1, capable to overcome/reduce the above problems/drawbacks coming from the use of electric heaters in contact with the evaporator during heat pump functioning.

The main principle of the invention is to introduce a controllable valve between the evaporator and the compressor to maintain a sufficiently high evaporation pressure within the evaporator to increase the coefficient of performance (COP) of the heat pump and reduce the use of additional heat sources. In the following, with "evaporator" is intended the heat exchanger arranged in the external environment during heat pump mode of thermodynamic cycle.

Such controllable valve helps to maintain the evaporation pressure above a predetermined minimum threshold pressure by adjustment of the controllable valve. According to the invention, such a controllable valve is controlled on the evaporator pressure at the evaporator outlet and as a function of the external environmental temperature.

According to a control method, when the evaporation pressure is above a predetermined threshold, the valve remains open. When the external environmental temperature falls also the pressure at the evaporation falls and compressor suction capacity exceeds the volume of vapor produced by the evaporator; thus, according to the present invention, the valve gradually closes, by throttling the connection between the evaporator outlet and the compressor inlet, and the evaporation pressure rises at least until said predetermined threshold is achieved.

Thanks to the present invention, at least two main advantages are achieved:
- Increasing the heating power of the heat pump and accordingly the thermal coefficient of performance,
- a good regulation of the evaporation pressure regardless the external environmental temperature.

These and further objects are achieved by means of the attached claims, which describe preferred embodiments of the invention, forming an integral part of the present description.

### Brief description of the drawings

The invention will become fully clear from the following detailed description, given by way of a mere exemplifying and non-limiting example, to be read with reference to the attached drawing figures, wherein:
- Fig. 1 shows a simplified scheme of a heat pump according to the present invention,
- Fig. 2 shows the combination of said simplified scheme of figure 1 with a ventilating system of a vehicle.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

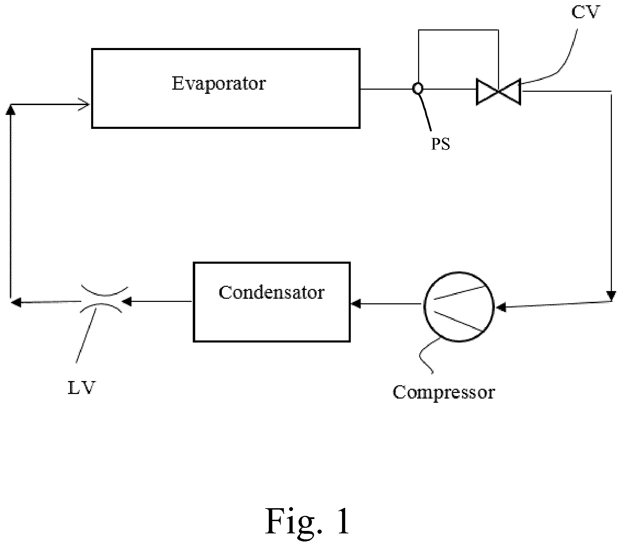

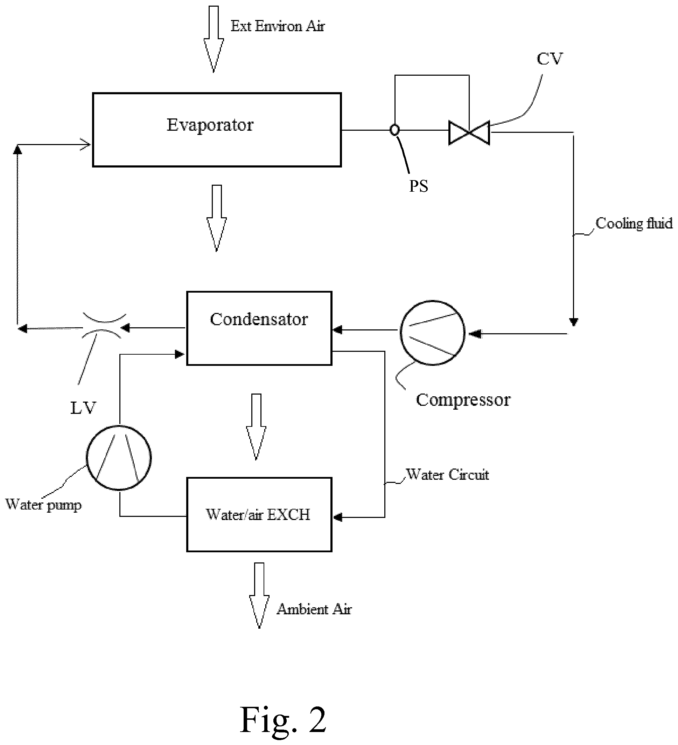

Figure 1 shows a classical scheme of a cooling circuit modified according to the present invention.
The circuit is intended to work as a heat pump even if a known four ports valve can be implemented in order to invert the thermodynamic cycle making it working as a cooler (cooler mode) instead of a heat pump (heat pump mode).
The evaporator is intended to be installed outdoor in order to extract heat from the external environment, while the condenser is intended to be installed in a room or vehicle coach to heat the same.
A compressor sucks the vapor phase from the evaporator and compress it into the condenser and, as usual, between the Condenser and Evaporator a lamination valve LV is arranged. According to the present invention, a controllable valve CV is installed between the evaporator outlet and the compressor inlet in order to control the pressure within the evaporator.
According to the invention, the controllable valve is enslaved of a pressure sensor PS installed at the outlet of the evaporator.
According to a preferred embodiment of the invention, the heat exchanger within the room or vehicle coach, namely the condenser (heat pump mode) is of the coolant fluid/air type. While, according to another preferred embodiment of the invention, said heat exchanger within the room or vehicle coach is of the fluid/water type, preferably with brazed plate. The water is circulated by a water pump in an auxiliary circuit having an auxiliary heat exchanger of the water/air type. Said auxiliary heat exchanger is preferably coupled with one or more fans or with an air circulation system. This embodiment finds favorable application within the electric vehicle, especially for the busses, where the coach has a relevant volume.
The auxiliary medium is indicated in figure 2 as Water, however it could be water with suitable and known additives, thus the auxiliary medium is a brine.
According to an embodiment which is not part of the invention, the controllable valve CV is controlled only on the pressure sensor PS measurements.
According to the invention, such controllable valve CV is controlled as a function of the pressure at the evaporator outlet - monitored by the pressure sensor PS, and of the external environmental temperature, monitored by a temperature sensor, not shown.
Therefore, the control valve actuation can be controlled toward gradual throttling positions according to the external environmental temperature falling.
A control unit, not shown, controlling the compressor, the eventual water pump circulating the auxiliary medium (brine) and is programmed also to control the controllable valve according to what disclosed above.
By a method point of view, the present invention corresponds to control the pressure inside the evaporator through coolant fluid outflow control. In particular, the outflow in controlled in order to maintain the pressure within the evaporator above a predetermined minimum threshold pressure.
It should be understood, that the there is no incongruence if the fluid is called "coolant fluid" and the cycle is performed to heat a room or a vehicle coach, because "coolant" or "refrigerant" is a conventional attribute for the fluid, substance or mixture, used in a heat pump and/or refrigeration cycles. R401A, R410A until R502 are the more common fluids implemented in the conditioning systems including the present one.
This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.
Many changes, modifications, variations and other uses and applications of the subject invention will become apparent to those skilled in the art after considering the specification and the accompanying drawings which disclose preferred embodiments thereof.

## Claims

1. Air conditioning system, in particular for electric vehicle applications, defined by a closed circuit where coolant fluid circulates, the circuit comprising
- a first heat exchanger, which can work as an evaporator, intended to be installed in the external environment,
- a second heat exchanger, which can work as a condenser, intended to be installed in room or vehicle coach,
- a compressor arranged between said first and second heat exchangers and a lamination valve (LV) arranged symmetrically to the compressor between said second and first heat exchangers,
the conditioning system comprising
- a controllable valve (CV) arranged between said first heat exchanger and said compressor in order to maintain a fluid pressure within said first heat exchanger above a predetermined minimum threshold pressure, when said first heat exchanger works as an evaporator during a heat pump mode.
- a pressure sensor (PS) arranged within said first heat exchanger, which can work as an evaporator, or at the outlet of said first heat exchanger, which can work as an evaporator, in order to control said controllable valve (CV) accordingly;
the system being **characterized in** comprising control means configured to control at least said compressor and said controllable valve (CV) at least based on a measurement of said pressure sensor (PS) and a temperature sensor arranged in the external environment to measure a temperature thereof, and wherein said control means are configured to control said controllable valve (CV) also on the basis of a measurement of said temperature sensor.

2. System according to claim 1, further comprising means to invert such thermodynamic cycle in order to make said first heat exchanger working as a condenser and said second heat exchanger as an evaporator, during a cooler mode.

3. System according to any of previous claims 1 or 2, wherein said second heat exchanger is of the coolant fluid/air type or wherein said second heat exchanger is of the coolant fluid/water type.

4. System according to any of previous claims from 1 to 3, wherein said second heat exchanger is of the coolant fluid/water type and the system comprises an auxiliary circuit further comprising an auxiliary heat exchanger and a water pump for circulating said water.

5. System according to claim 4, wherein one or more fans or an air circulation system is coupled with said auxiliary heat exchanger.

6. Method to operate a conditioning system according to any of previous claims from 1 to 5, comprising the step to maintain a pressure within said first heat exchanger, working as an evaporator, above a predetermined pressure threshold and
the step to operate such control as a function of the external environmental temperature.

7. Computer program comprising computer program code means adapted to perform all the steps of claim 6, when said program is run on a computer.

8. A computer readable medium having a program recorded thereon, said computer readable medium comprising computer program code means adapted to perform all the steps of claim 6, when said program is run on a computer.

9. Electric vehicle **characterized in** comprising an air conditioning system according to any of previous claims 1 to 5.

## Patentansprüche

1. Klimatisierungssystem, insbesondere für elektrische Fahrzeuganwendungen, definiert durch einen geschlossenen Kreislauf, in welchem ein Kühlfluid zirkuliert, welcher Kreislauf folgendes umfasst:
- einen ersten Wärmetauscher, welcher als Verdampfer arbeiten kann, vorgesehen zur Installation in einer äußeren Umgebung,
- einen zweiten Wärmetauscher, welcher als Kondensator arbeiten kann, vorgesehen zur Installation in einen Raum oder einer Fahrzeugkabine,
- einen Kompressor, angeordnet zwischen den ersten und zweiten Wärmetauschern, und ein Drosselventil (LV), welches symmetrisch zum Kompressor zwischen den ersten und zweiten Wärmetauschern angeordnet ist;
welches Klimatisierungssystem umfasst:
- ein steuerbares Ventil (CV), angeordnet zwischen dem ersten Wärmetauscher und dem Kompressor zur Erhaltung eines Fluiddrucks innerhalb des ersten Wärmetauschers oberhalb eines vorbestimmten Minimum-Stelldrucks, wenn der erste Wärmetauscher als ein Verdampfer in einem Verdampfer-Pumpmodus arbeitet;
- einen Drucksensor (PS), angeordnet innerhalb des ersten Wärmetauschers, welcher als ein Verdampfer arbeiten kann, oder an dem Auslass des ersten Wärmetauschers, welcher als ein Verdampfer arbeiten kann, zur entsprechenden Steuerung des steuerbaren Ventils (CV);
welches System **dadurch gekennzeichnet ist, dass** es Steuermittel umfasst, ausgebildet zur Steuerung zumindest des Kompressors und des steuerbaren Ventils (CV) zumindest auf Grundlage einer Messung des Drucksensors (PS) und eines Temperatursensors, der in der äußeren Umgebung angeordnet ist, zur Messung einer Temperatur derselben, wobei die Steuermittel dazu ausgebildet sind, das steuerbare Ventil (CV) ebenfalls auf der Basis einer Messung des Temperatursensors zu steuern.

2. System gemäß Anspruch 1, ferner umfassend Mittel zur Umkehrung eines solchen thermodynamischen Zyklus, so dass der erste Wärmetauscher als ein Kondensator und der zweite Wärmetauscher als ein Verdampfer in einem Kühlermodus arbeitet.

3. System gemäß einem der vorhergehenden Ansprüche 1 oder 2, bei welchem der zweite Wärmetauscher vom Kühlfluid/Luft-Typ ist, oder wobei der zweite Wärmetauscher vom Kühlfluid/Luft-Typ ist.

4. System gemäß einem der vorhergehenden Ansprüche 1 bis 3, bei welchem der zweite Wärmetauscher vom Kühlfluid/Wasser-Typ ist und das System einen Hilfskreislauf umfasst, welcher ferner einen Hilfswärmetauscher und eine Wasserpumpe zur Zirkulation von Wasser umfasst.

5. System gemäß Anspruch 4, bei welchem einer oder mehrere Gebläse oder ein Luftzirkulationssystem mit dem Hilfswärmetauscher gekoppelt ist.

6. Verfahren zum Betrieb eines Klimatisierungssystems gemäß einem der Ansprüche 1 bis 5, umfassend den Schritt der Erhaltung eines Drucks innerhalb des ersten Wärmetauschers, welcher als Verdampfer arbeitet, oberhalb eines vorbestimmten Schwelldrucks, und den Schritt des Betriebs einer solchen Steuerung als Funktion der äußeren Umgebungstemperatur.

7. Computerprogramm, umfassend Computerprogramm-Codemittel, ausgebildet zur Durchführung aller Schritte von Anspruch 6, wenn das Programm auf einem Computer ausgeführt wird.

8. Computerlesbares Medium, umfassend ein darauf gespeichertes Programm, welches computerlesbare Medium Computerprogramm-Codemittel umfasst, ausgebildet zur Durchführung aller Schritte aus Anspruch 6, wenn das Programm auf einem Computer ausgeführt wird.

9. Elektrisches Fahrzeug, **dadurch gekennzeichnet, dass** es ein Klimatisierungssystem gemäß einem der vorhergehenden Ansprüche 1 bis 5 umfasst.

## Revendications

1. Système de conditionnement d'air, en particulier pour applications de véhicule électrique, défini par un circuit fermé où un fluide de refroidissement circule, le circuit comprenant
- un premier échangeur de chaleur, qui peut servir d'évaporateur, destiné à être installé dans l'environnement externe,
- un deuxième échangeur de chaleur, qui peut servir de condenseur, destiné à être installé dans un habitacle ou une caisse de véhicule,
- un compresseur agencé entre les dits premier et deuxième échangeurs de chaleur et une vanne de stratification (LV) agencée de manière symétrique au compresseur entre lesdits deuxième et premier échangeurs de chaleur,
le système de conditionnement comprenant
- une vanne pouvant être commandée (CV) agencée entre ledit premier échangeur de chaleur et ledit compresseur afin de maintenir une pression de fluide dans ledit premier échangeur de chaleur au-dessus d'une pression de seuil minimum prédéterminée, quand ledit premier échangeur de chaleur sert d'évaporateur durant un mode pompe à chaleur ;
- un capteur de pression (PS) agencé dans ledit premier échangeur de chaleur, qui peut servir d'évaporateur, ou au niveau de la sortie dudit premier échangeur de chaleur, qui peut servir d'évaporateur, afin de commander ladite vanne pouvant être commandée (CV) en conséquence ;
le système étant **caractérisé en ce qu'**il comprend un moyen de commande configuré pour commander au moins ledit compresseur et ladite vanne pouvant être commandée (CV) au moins sur la base d'une mesure dudit capteur de pression (PS) et un capteur de température agencé dans l'environnement externe pour mesurer une température de celui-ci, et dans lequel ledit moyen de commande est configuré pour commander ladite vanne pouvant être commandée (CV) également sur la base d'une mesure dudit capteur de température.

2. Système selon la revendication 1, comprenant en outre un moyen pour inverser un tel cycle thermodynamique afin que ledit premier échangeur de chaleur serve de condenseur et que ledit deuxième échangeur de chaleur serve d'évaporateur, durant un mode refroidisseur.

3. Système selon l'une quelconque des revendications 1 ou 2, dans lequel ledit deuxième échangeur de chaleur est du type fluide de refroidissement/air ou dans lequel ledit deuxième échangeur de chaleur est du type fluide de refroidissement/eau.

4. Système selon l'une quelconque des revendications 1 à 3, dans lequel ledit deuxième échangeur de chaleur est du type fluide de refroidissement/eau et le système comprend un circuit auxiliaire comprenant en outre un échangeur de chaleur auxiliaire et une pompe à eau pour faire circuler ladite eau.

5. Système selon la revendication 4, dans lequel une ou plusieurs soufflantes ou un système de circulation d'air est accouplé audit échangeur de chaleur auxiliaire.

6. Procédé pour faire fonctionner un système de conditionnement selon l'une quelconque des revendications précédentes 1 à 5, comprenant l'étape consistant à maintenir une pression dans ledit premier échangeur de chaleur, servant d'évaporateur, au-dessus d'un seuil de pression prédéterminé et l'étape consistant à actionner une telle commande en fonction de la température environnementale externe.

7. Programme informatique comprenant un moyen de code de programme informatique adapté pour réaliser toutes les étapes de la revendication 6, quand ledit programme est exécuté sur un ordinateur.

8. Support lisible sur ordinateur ayant un programme enregistré sur celui-ci, ledit support lisible sur ordinateur comprenant un moyen de code de programme informatique adapté pour réaliser toutes les étapes de la revendication 6, quand ledit programme est exécuté sur un ordinateur.

9. Véhicule électrique **caractérisé en ce qu'**il comprend un système de conditionnement d'air selon l'une quelconque des revendications précédentes 1 à 5.
